# EUROPÄISCHE PATENTSCHRIFT

(11) **EP 1 606 369 B1**
(45) Veröffentlichungstag und Bekanntmachung des Hinweises auf die Patenterteilung: **26.12.2012**
(21) Anmeldenummer: 04720619.8
(22) Anmeldetag: 15.03.2004
(51) Int. Cl.: C09K 5/18, A47J 36/28

(54) **WARME ERZEUGENDE MISCHUNG SOWIE VORRICHTUNG UND VERFAHREN ZUR WARMEERZEUGUNG**
HEAT-GENERATING MIXTURE AND DEVICE AND METHOD FOR HEAT GENERATION
MELANGE THERMOGENE ET DISPOSITIF ET PROCEDE POUR PRODUIRE DE LA CHALEUR

(30) Priorität: 13.03.2003 DE 10311400
(43) Veröffentlichungstag der Anmeldung: 21.12.2005
(73) Patentinhaber: RUAG Ammotec GmbH, 90765 Fürth (DE)
(72) Erfinder: LECHNER, Peter, Simon, 90522 Oberasbach (DE); BLEY, Ulrich, 90766 Fürth (DE); HAGEL, Rainer, 91058 Erlangen (DE); HOSCHENKO, Aleksej, 90765 Fürth (DE)
(74) Vertreter: Uppena, Franz
(86) Internationale Anmeldenummer: PCT/EP2004/002661
(87) Internationale Veröffentlichungsnummer: WO 2004/080251

(56) Entgegenhaltungen:
- DE-C- 856 953
- GB-A- 572 573
- GB-A- 575 475
- GB-A- 575 575
- US-A- 3 311 459
- US-B1- 6 267 110
- DATABASE WPI Section Ch, Week 200007 Derwent Publications Ltd., London, GB; Class A97, AN 2000-075368 XP002286490 & JP 11 310504 A (SANKO KAGAKU KOGYO KK) 9. November 1999 (1999-11-09)

## Beschreibung

Die Erfindung betrifft eine Wärme erzeugende Mischung sowie ein Verfahren und eine Vorrichtung zur Erzeugung von Wärme, insbesondere für die Erhitzung von Lebensmitteln wie Wasser, Kaffee, Instantgerichte etc.

Wärmeerzeugung mittels Thermit ist in der traditionellen Schweißtechnik an sich bekannt. Bei der Wärmeerzeugung für Lebensmittel kann Thermit jedoch nicht verwendet werden, da Thermit eine schmelzflüssige Luppe bildet, die zu einer mechanischen Instabilität bis hin zum Durchschmelzen der Ummantelung der Vorrichtung zur Wärmeerzeugung führen kann.

Die US-Patenschrift 6,267,110 B1 offenbart eine Wegwerferhitzungseinheit für einen Nahrungsbehälter. Die dort offenbarte Vorrichtung enthält als Wärme erzeugende Mischung auch Komponenten, die spontan bei Raumtemperatur miteinander reagieren, wenn sie miteinander in Kontakt gebracht werden, wobei mindestens eine dieser Komponenten in flüssiger Form vorliegt.

Dokument GB 572,573 offenbart Wärme erzeugende Zusammensetzungen, die eine Mischung von festen oxidierenden und reduzierenden Agenzien umfassen, wobei Eisen- und/oder Bleioxid als oxidierendes Agens und ein Metall, eine Legierung oder ein Metallsilicid wie Calciumsilicid als reduzierendes Agens enthalten sind. Im Beispiel wird eine Mischung aus 32,5 Gew.-% Calciumsilicid, 60 Gew.-% rotes Bleioxid (Pb₃O₄) und 7,5 Gew.-% Talk (Magnesiumsilikathydrat) verwendet. Die Zusammensetzungen werden zum Erhitzen von Nahrungsmitteln oder Getränken verwendet. Dabei erfolgt das Erhitzen der Zusammensetzungen mit Hilfe einer "priming composition" und eines Zünders.

Dokument DE 856 953 C beschreibt Heizkörper mit einer chemisch reagierenden Heizpatrone, die zum Erwärmen von Nahrungsmitteln verwendet werden kann. Dabei kommen eine Heizladung, eine Zündladung sowie eine Zündvorrichtung zum Einsatz. Die Heizladungen enthalten ein aus Silicium und Calcium bestehendes Silicid mit einem hohen Siliciumgehalt und Eisenoxid. Eine bevorzugte Heizladung enthält 35 Gew.-% Calciumsilicid, 55 Gew.-% Eisenoxid, 5 Gew.-% Strontiumchromat und 5 Gew.-% Mennige (Pb₃O₄). Zum Entzünden des Gemisches wird eine Zündladung verwendet, die mit Hilfe einer Zündvorrichtung entzündet wird. Die Zündvorrichtung kann z.B mechanisch oder elektrisch aktiviert werden.

Dokument US-A-3 311 459 offenbart Heizvorrichtungen, bei denen ein Eisenoxid (Fe₂O₃) und Calciumsilicid enthaltendes pulvriges Gemisch zum Einsatz kommt, das nach Zündung eine exotherme chemische Reaktion zeigt. Das exotherme Gemisch ist an Asbestfasern fixiert und zu dünnen, flexiblen Blättern von papierartiger physikalischer Struktur geformt.

Dokument JP11-310504 A beschreibt ein granulares, Wärme erzeugendes Material, das u.a. Silicium oder Eisensilicid, ein Metaloxid, einen mineralischen Verbrennungsregulator und Nitrozellulose in einem porösen Zustand enthält. Dieses Gemisch dient als Verdampfer von Pestiziden und Insektiziden.

Aus dem Dokument GB 575,475 A sind Lebensmittelverpackungen oder Vorrichtungen bekannt, die einen hermetisch geschlossenen Behälter besitzen, in dem Lebensmitteln durch Konvektion erhitzt werden, wobei der Behälter in eine chemische Heizladung eintaucht, die im Wesentlichen aus einer druckverdichteten Mischung von Silizium und Eisenoxid besteht.

Aufgabe der vorliegenden Erfindung war es daher, Wärme erzeugende Mischungen bereit zu stellen, die die Nachteile des Standes der Technik beseitigen.

Die erfindungsgemäße Lösung sieht eine Wärme erzeugende Mischung vor, die 40 bis 55 Gew.-%, vorzugsweise 45 bis 50 Gew.-% Eisensilicid, 40 bis 60 Gew.-%, vorzugsweise 45 bis 55 Gew.-% Eisen-(III)-oxid, 0 bis 10 Gew.-%, vorzugsweise 0 bis 5 Gew.-% Silicium, 0 bis 5 Gew.-% Siliciumdioxid und 0 bis 20 Gew.-%

Wasserglas enthält. Die erfindungsgemäße Wärme erzeugende Mischung befindet sich in einer Vorrichtung, die in und/oder an einer Umhüllung unter anderem neben der zu erhitzenden Substanz eine Anzündverstärkungsladung (Boosterladung) und einen mechanisch oder elektrisch, vorzugsweise piezoelektrisch, auslösbaren Anzünder enthält. Dabei kann die Umhüllung aus Metall und/oder Kunststoff bestehen. Im Bedarfsfall wird bei der erfindungsgemäßen Wärmeerzeugung durch den Anzünder die Boosterladung gezündet, die wiederum eine sichere und gleichmäßige Anzündung der erfindungsgemäßen Wärme erzeugenden Mischung bewirkt. Die langsame und ohne Abbrandschwaden verlaufende Verbrennung der Wärme erzeugenden Mischung bewirkt in einer geeigneten mechanischen Umhüllung eine Erwärmung von beispielsweise Wasser. Dabei sind die thermo-mechanischen Belastungen der Umhüllung deutlich reduziert, da sich beim Abbrennen eine erwünschte nicht schmelzende poröse Schlacke bildet, in der sich die Eisenkügelchen nicht zu einer schmelzflüssigen Luppe vereinigen können. Die Temperatur und die Zeit zur Erreichung der maximalen Temperatur können über die Rezeptur, die Menge der eingesetzten Mischung, die Wassermenge und/oder die Art der mechanischen Ummantelung gesteuert werden. So erhitzen beispielsweise 25 g der erfindungsgemäßen Mischung 125 ml Wasser in einer geeigneten Apparatur innerhalb von 60 Sekunden von 20°C auf 98°C.

In der erfindungsgemäßen Wärme erzeugenden Mischung als auch in der zugehörigen Boosterladung als auch in der Anzündmischung werden nur Feststoffe eingesetzt, die bei Raumtemperatur nicht miteinander reagieren. Als erfindungsgemäße Wärme erzeugende Mischung dient beispielsweise ein Gemisch, das 40 bis 55 Gew.% Eisensilicid, 40 bis 60 Gew.% Eisen-(III)-oxid, 0 bis 10 Gew.% Silicium sowie Zuschlagstoffe und Verarbeitungshilfen wie Siliciumdioxid oder Wasserglas enthält. Als Anzündverstärkungsladung (Boosterladung) für die Wärme erzeugende Mischung können beispielsweise Gemische, die Leichtmetalle wie Titan, Magnesium und/oder Aluminium und Metallsilicide wie Calciumsilicid und/oder Eisensilicid, Eisenoxid, Silicium sowie Zuschlagstoffe enthalten oder andere aus dem Stand der Technik bekannte Gemische dienen, enthält. Als Anzünder für die Boosterladung werden vorzugsweise mechanisch auslösbare Amboßanzündhütchen basierend auf blei- und schwermetallfreien Anzündmischungen verwendet. Diese sind aus dem Stand der Technik bekannt und enthalten beispielsweise Kaliumdinitrobenzofuroxanat oder Diazodinitrophenol, Tetrazen, Zinkperoxid, Nitrocellulose und Zuschlagstoffe wie Glaspulver und Titan. Die Herstellung der erfindungsgemäßen Wärme erzeugenden Mischungen erfolgt nach an sich bekannten Methoden: die Komponenten werden in den angegebenen Mengen vermischt und gegebenenfalls verpresst. Gleiches gilt für die Anzündmischung und die Boosterladung.

Die Satzrezepturen werden durch nachstehende Beispiele erläutert, ohne die Erfindung dadurch einzuschränken:

**Wärme erzeugende Mischung (Tabelle 1):**

| Beispiel 1 | Anteil [Gew.%] |
|---|---|
| Eisensilicid | 40 - 55 |
| Eisen-(III)-oxid | 40 - 60 |
| Silicium | 0 - 10 |
| Siliciumdioxid | 0 - 5 |
| Wasserglas | 0 - 20 |

**Boosterladung (Tabelle 2):**

| 1 | 2 | Anteil [Gew.%] |
|---|---|---|
| Magnesium | Titan | 10 - 30 |
| Calciumsilicid | Calciumsilicid | 25 - 35 |
| Silicium | Silicium | 0 - 10 |
| Eisen-(III)-oxid | Eisen-(III)-oxid | 40 - 55 |
| Zuschlagstoffe: | Zuschlagstoffe: | |
| Binder | Binder | 0 - 10 |
| Siliziumdioxid | Siliziumdioxid | 0 - 10 |
| Grafit | Grafit | 0 - 10 |
| Bornitrid | Bornitrid | 0 - 10 |

**Anzündmischung (Tabelle 3):**

| 1 | 2 | Anteil [Gew.%] |
|---|---|---|
| Kaliumdinitrobenzofuroxanat | Diazodinitrophenol | 20 - 40 |
| Zinkperoxid | Zinkperoxid | 20 - 40 |
| Tetrazen | Tetrazen | 0 - 10 |
| Titan | Titan | 0 - 20 |
| Nitrocellulose | Nitrocellulose | 0 - 40 |
| Glaspulver | Glaspulver | 0 - 20 |

Als vorzugsweise Ausgestaltungen seinen folgende Zusammensetzungen genannt, ohne weitere mögliche Rezepturen dadurch einzuschränken:

| | | |
|---|---|---|
| Wärme erzeugende Mischung: | Eisensilicid | 48 Gew.% |
| | Eisen-(III)-oxid: | 50 Gew.% |
| | Silicium: | 2 Gew.% |
| Boosterladung: | Magnesium: | 20 Gew.% |
| | Calciumsilicid: | 30 Gew.% |
| | Silicium: | 3 Gew.% |
| | Eisen-(III)-oxid: | 47 Gew.% |
| Anzündmischung: | Kaliumdinitrobenzofuroxanat: | 30 Gew.% |
| | Zinkperoxid: | 25 Gew.% |
| | Tetrazen: | 5 Gew.% |
| | Titan: | 5 Gew. % |
| | Nitrocellulose: | 35 Gew.% |

Die erfindungsgemäße Wärme erzeugende Mischung kann beispielsweise verwendet werden, um in einer geeigneten Vorrichtung Lebensmittel wie Wasser, Kaffee, Instantgerichte etc. genussfertig zuzubereiten.

## Patentansprüche

1. Wärmeerzeugende Mischung, **dadurch gekennzeichnet, dass** sie 40 bis 55 Gew.-%, vorzugsweise 45 bis 50 Gew.-% Eisensilicid, 40 bis 60 Gew.-%, vorzugsweise 45 bis 55 Gew.-% Eisen-(III)-oxid, 0 bis 10 Gew.-%, vorzugsweise 0 bis 5 Gew.-% Silicium, 0 bis 5 Gew.-% Siliciumdioxid und 0 bis 20 Gew.-% Wasserglas enthält.

2. Wärmeerzeugende Mischung nach Anspruch 1, **dadurch gekennzeichnet, dass** sie 48 Gew.-% Eisensilicid, 50 Gew.-% Eisen-(III)-Oxid und 2 Gew.-% Silicium enthält.

3. Verfahren zur Erzeugung von Wärme, **dadurch gekennzeichnet, dass** zur Wärmeerzeugung ein mechanisch oder elektrisch, vorzugsweise piezoelektrisch, auslösbarer Anzünder eine Boosterladung zündet, die eine Anzündung einer Wärme erzeugenden Mischung nach Anspruch 1 oder 2 bewirkt.

4. Verfahren zur Erzeugung von Wärme nach Anspruch 3, **dadurch gekennzeichnet, dass** der Anzünder mechanisch ausgelöst wird.

5. Vorrichtung zur Erzeugung von Wärme, **dadurch gekennzeichnet, dass** in und/oder an einer Umhüllung ein mechanisch oder elektrisch, vorzugsweise piezoelektrisch, auslösbarer Anzünder, eine Boosterladung und eine Wärme erzeugende Mischung nach Anspruch 1 oder 2 angebracht und/oder enthalten sind.

6. Vorrichtung zur Erzeugung von Wärme nach Anspruch 5, **dadurch gekennzeichnet, dass** es sich bei dem Anzünder um ein mechanisch auslösbares Ambosszündhütchen handelt.

7. Verwendung einer Vorrichtung nach Anspruch 5 oder 6 zur Erhitzung von Lebensmitteln.

8. Verwendung einer Wärme erzeugenden Mischung nach Anspruch 1 oder 2 zur Erhitzung von Lebensmitteln.

## Claims

1. Heat-generating mixture, **characterized in that** it contains 40 to 55 wt.%, preferably 45 to 50 wt.%, of iron silicide, 40 to 60 wt.%, preferably 45 to 55 wt.%, of iron(III) oxide, 0 to 10 wt.%, preferably 0 to 5 wt.%, of silicon, 0 to 5 wt.% of silicon dioxide and 0 to 20 wt.% of water glass.

2. Heat-generating mixture according to claim 1, **characterized in that** it contains 48 wt.% of iron silicide, 50 wt.% of iron(III) oxide and 2 wt.% of silicon.

3. Method of heat generation, **characterized in that**, to generate heat, an igniter capable of being actuated mechanically or electrically, preferably piezoelectrically, ignites a booster charge, which ignites a heat-generating mixture according to claim 1 or 2.

4. Method of heat generation according to claim 3, **characterized in that** the igniter is actuated mechanically.

5. Device for heat generation, **characterized in that** an igniter capable of being actuated mechanically or electrically, preferably piezoelectrically, a booster charge and a heat-generating mixture according to claim 1 or 2 are fixed and/or contained in and/or on a casing.

6. Device for heat generation according to claim 5, **characterized in that** the igniter is an anvil-shaped ignition cap capable of being actuated mechanically.

7. Use of a device according to claim 5 or 6 for heating foodstuffs.

8. Use of a heat-generating mixture according to claim 1 or 2 for heating foodstuffs.

## Revendications

1. Mélange thermogène, **caractérisé en ce qu'**il contient de 40 à 55% en poids, de préférence de 45 à 50% en poids, de siliciure de fer, de 40 à 60% en poids, de préférence de 45 à 55% en poids d'oxyde de fer (III), de 0 à 10% en poids, de préférence de 0 à 5% en poids, de silicium, de 0 à 5% en poids de dioxyde de silicium et de 0 à 20% en poids de verre soluble.

2. Mélange thermogène selon la revendication 1, **caractérisé en ce qu'**il contient 48% en poids de siliciure de fer, 50% en poids d'oxyde de fer (III) et 2% en poids de silicium.

3. Procédé de production de chaleur, **caractérisé en ce que** pour produire de la chaleur, une amorce, pouvant être déclenchée par un moyen mécanique ou électrique, de préférence piézoélectrique, allume une charge additionnelle qui provoque l'allumage d'un mélange thermogène selon la revendication 1 ou 2.

4. Procédé de production de chaleur selon la revendication 3, **caractérisé en ce que** l'amorce est déclenchée par un moyen mécanique.

5. Dispositif de production de chaleur, **caractérisé en ce qu'**une amorce, pouvant être déclenchée par un moyen mécanique ou électrique, de préférence piézoélectrique, une charge additionnelle et un mélange thermogène selon la revendication 1 ou 2 sont disposés et/ou contenus dans et/ou sur une enveloppe.

6. Dispositif de production de chaleur selon la revendication 5, **caractérisé en ce que** l'amorce est une amorce d'allumage à enclume à déclenchement mécanique.

7. Utilisation d'un dispositif selon la revendication 5 ou 6 pour réchauffer des aliments.

8. Utilisation d'un mélange thermogène selon la revendication 1 ou 2 pour réchauffer des aliments.
